# EUROPEAN PATENT APPLICATION

(11) **EP 1 833 250 A1**
(43) Date of publication of application: **12.09.2007**
(21) Application number: 07103454.0
(22) Date of filing: 02.03.2007
(51) Int. Cl.: H04N 7/16

(54) **System and method for dedicated-channel distribution of a plurality of signals in a condominium and/or community environment**

(30) Priority: 07.03.2006 IT TO20060164
(71) Applicant: Fracarro Radioindustrie S.p.A., 31033 Castelfranco Veneto (TV) (IT)
(72) Inventor: Marconcin, Antonio, 31033, Castelfranco Veneto (TV) (IT); Righetto, Luigi, 31055, Quinto di Treviso (TV) (IT)
(74) Representative: Dini, Roberto

(57) **Abstract**

The present invention relates to a system and a method for distributing a plurality of television signals and/or audio and/or video signals in a condominium and/or community environment, said system comprising reception means (2,3,5) to receive at least a part of said signals via satellite, frequency conversion means (7) to convert in frequency one or more of said received signals into personal distribution channels, distribution means (13,17,24) to distribute said signals to at least one respective user terminal (23) capable of receiving said signals, and selection means (9,21) to select at least one of said signals received via satellite through control means (25) which can be operated by a user.

The invention is characterized in that said frequency conversion means (7) and said selection means (9,21) comprise first (8) and second (10,20) programmable memory means, respectively, which allow at least one personal distribution channel and one personal return channel to be associated with each user terminal (23).

## Description

The present invention relates to a system for distributing a plurality of television signals and/or audio signals in a condominium and/or community environment, wherein the term "condominium" refers to a block of flats and the term "community" refers to a block of one or several buildings.

Distribution systems and methods for distributing signals in a condominium and/or community environment are known in the art.

For example, European Patent EP 1062811 B1 in the name of the present Applicant describes a system for distributing signals in a condominium and/or community environment which allows to distribute a plurality of signals received via radio and/or satellite and/or cable. The received signals are modulated according to QAM frequency modulation, and then distributed to a plurality of users through a distribution network. This permits to simplify the structure of the receivers used for receiving and decoding the signal, since it is sufficient that such receivers are provided with means for demodulating the signal received through QAM modulation.

European Patent EP 1062811 also teaches how to subdivide into personal channels a frequency band in which all the signals received via radio and/or satellite and/or cable have been allocated, thus allowing to assign each personal channel to a certain user terminal of the distribution system. Personal channels are therefore reserved for predetermined signal sockets whereto the user terminals have been connected. In order to make each user to receive his/her only reserved personal channel, band-stop filters are provided upstream of the signal sockets to block all distributed channels except the one reserved for the user concerned.

However, the distribution system described in European Patent EP 1062811 suffers from at least three drawbacks:
- transmodulating devices are needed to modulate satellite signals through QAM modulation;
- the network must comprise a plurality of band-stop filters to prevent channels other than the personal one from being distributed to each user;
- the receiver must necessarily be fitted with demodulators adapted to demodulate the signals received according to the QAM technique.

The first two drawbacks imply higher costs for designing the distribution system, while the third drawback prevents from a universal use of the receiver, i.e. it cannot be used in a different distribution system not employing transmodulation, as most distribution systems currently in use.

Patent EP 1062811 also describes the use of a return channel, for example a channel with FSK modulation, through which the user carries out the transmission of a message from its own user terminal to the head of the distribution system. A message of this kind typically includes the selection of a signal available in the aerial. However, managing the frequencies in which the return channel operates is a complex task, because said return channel is allocated within the personal channel band of the input signal, which requires a careful handling of the input and return signals to avoid possible mutual interference.

The main object of the present invention is therefore to overcome the above-mentioned drawbacks by providing a condominium and/or community distribution system of a type comprising a single-cable distribution network which allows to optimize the use of the available band while offering the utmost flexibility to the user.

It is a further object of the present invention to provide a system for distributing a plurality of signals in a condominium and/or community environment which allows to associate a personal channel with a user terminal in a simple way and by using a limited number of physical components.

It is a further object of the present invention to provide a system for distributing a plurality of signals in a condominium and/or community environment which allows to distribute signals to user terminals capable of receiving said signals without the need of transmodulating devices to modulate said signals according to a particular type of modulation.

It is a further object of the present invention to provide a system for distributing a plurality of signals in a condominium and/or community environment wherein the user terminals adapted to receive the signals do not require demodulating devices other than those commonly available on the market.

It is a further object of the present invention to provide a system for distributing a plurality of signals in a condominium and/or community environment which is modular, so as to allow to enable or disable a system user easily without causing any inconvenience to the other system users.

It is a further object of the present invention to provide a system for distributing a plurality of signals in a condominium and/or community environment which is less expensive than the systems currently in use.

It is a further object of the present invention to provide a system for distributing a plurality of signals in a condominium and/or community environment which allows for a simplified management of the return channel.

These and other objects of the invention are achieved through the method and the system as claimed in the appended claims.

According to the present invention, frequency conversion means are used for frequency converting the signals received via satellite into reserved frequency portions, or personal distribution channels, of a frequency band. In a preferred embodiment of the invention, the frequency band is the IF Sat intermediate frequency band comprised between 950 and 2,150 MHz.

Each user terminal capable of receiving the distributed signals is associated with a personal distribution channel by the programming of suitable memory means included in the frequency conversion means.

Each user terminal is also associated with a personal return channel by programming suitable memory means included in respective selection means. Preferably, the selection means comprise an FSK transmitter and an FSK receiver, which communicate with each other to send a user terminal message to the frequency conversion means, thus selecting a certain signal available in the aerial.

The above objects will become apparent from the following detailed description of the method and system according to the invention, with particular reference to the annexed figures, wherein:
- Fig. 1 is a general diagram of a system for distributing a plurality of signals in a condominium and/or community environment according to the present invention;
- Figs. 2a and 2b illustrate a first frequency band comprising a plurality of personal distribution channels and a second frequency band comprising a plurality of personal return channels, respectively, to exemplify the subdivision into channels of the band available on the single-cable distribution network;
- Fig. 3 is a table that lists the subdivision into channels of the frequency bands shown in Figs. 2a and 2b.

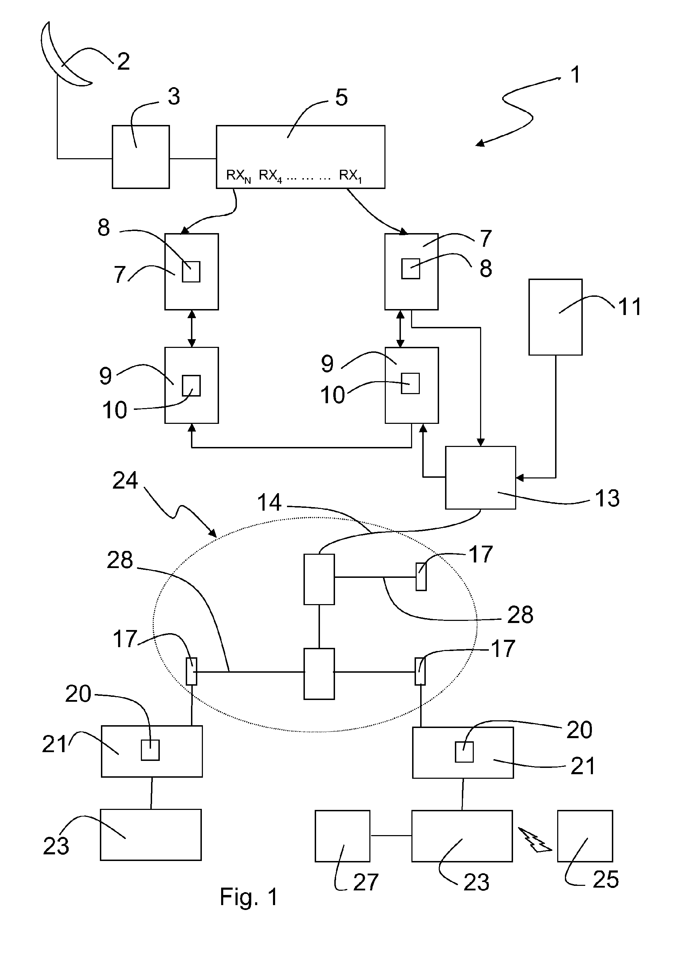

Fig. 1 shows a general diagram of a system 1 for distributing a plurality of signals in a condominium and/or community environment.

System 1 comprises reception means 2,3,5 for receiving signals via satellite, wherein reference number 2 designates an aerial for the reception of satellite signals and reference number 3 designates a device which amplifies the signals received from aerial 1 and converts them into the IF-SAT intermediate frequency band, comprised between 950 and 2,150 MHz. Device 3 is, for example, a universal LNB (Low Noise Block) module.

Downstream of the LNB module 3, there is multiswitch module 5 that receives the signals output by the LNB module 3 and branches them off into a plurality of outputs RX₁, ..., RX_{N}, wherein N represents the number of outputs of the multiswitch.

Reference number 7 designates an IF-IF frequency converter for frequency converting one or more of said signals received via satellite into reserved frequency portions, or personal distribution channels, of the IF Sat intermediate frequency band, comprised between 950 and 2,150 MHz.

IF-IF frequency converter 7 incorporates a polarity and band selector of the input transponder. As known, the term "transponder" refers to the signal received by the aerial in an IF Sat band portion, which carries a plurality of television and radio programmes.

The IF-IF frequency converter 7 performs the following steps:
- it selects the band and the polarity of an input signal, e.g. by sending a 13/18V, 0/22kHz signalling to multiswitch module 5, or else directly to LNB module 3, if there is no multiswitch module 5;
- it filters the selected transponder with a filter having a bandwidth approximately equal to that of the transponder;
- it converts the transponder to a personal distribution channel which is programmable in the IF-SAT band.

Advantageously, the presence of IF-IF frequency converters 7 makes it unnecessary to use transmodulators in the system, so that the signal is processed by keeping the original modulation (e.g. QPSK or 8-PSK).

Reference number 13 designates a module for mixing the IF-SAT band with the band of return channel 14 and with other spectrum bands used for distributing the signals, e.g. coming from other television signal sources 11.

The output of mixing module 13 is distributed through a distribution network 24, the passband of which also includes return channel 14, to lines 28 which represent the entries to the various flats, said lines 28 consisting of a coaxial cable.

Reference number 17 designates the signal sockets available in the flats, whereas 23 designates a single-tuner user terminal, such as a standard satellite receiver, or a multiple-tuner user terminal, such as a so-called "personal video recorder" or PVR, which is operated by the user through control means 25, e.g. a remote control, in order to supply television signals to a television apparatus 27.

System 1 also comprises selection means 9,21 which permit communication between user terminal 23 and IF-IF frequency converters 7 in order to select at least one signal received by reception means 1,3,5 and to convert it on the channel dedicated to user terminal 23, which generates a selection command by means of the respective IF-IF frequency converter 7.

According to the invention, IF-IF frequency converter 7 and selection means 9,21 comprise respective first memory means 8 and second memory means 10,20, such as a programmable memory, which can be programmed by means of a suitable programming device in use by the installer of system 1.

The programming process involves assigning the same identification address to IF-IF frequency converter 7 and to respective selection means 9,21, thus associating them. In this way, each message sent by selection means 9,21 can be interpreted correctly only by respective IF-IF frequency converter 7 that receives it. The same identification address must also be programmed in a memory of user terminal 23.

IF-IF frequency converter 7 and selection means 9,21 comprise interface means, not shown, for interfacing with the programming device.

Said interface means comprise an interface adapted to connect the first and second memory means 8,10,20 to a local area network.

For programming memory means 8,10,20, it may be necessary to use a password in order to deny unauthorized access to system 1 to people other than the installer.

In a preferred embodiment, selection means 9,21 comprise at least one FSK receiver 9, connected to an IF-IF frequency converter 7, and one FSK transmitter 21, connected to a user terminal 23.

FSK receiver 9 is fitted with a programmable memory 10, while FSK transmitter 21 is fitted with a programmable memory 20.

Each FSK receiver 9 is connected to a single IF-IF frequency converter 7 or to at least one additional IF-IF frequency converter 7, depending on whether it operates in "single tuner" mode, i.e. it is associated with a single-input user terminal 23, or in "multiple tuner" mode, i.e. it is associated with a multiple-input user terminal 23. The latter is the case when a user owns, for example, a personal video recorder or "PVR".

In the case of a "multiple-tuner" user terminal 23, one identification address must be programmed for each tuner. A single personal control channel serves all tuners of the same user terminal 23, e.g. the one corresponding to the ID entered for the first tuner, whereas there is one personal distribution channel per tuner.

Between each user terminal 23 and network 24 there is an FSK transmitter 21 having at least one coaxial cable input through which it receives messages, e.g. DiSEqC™ type, from user terminal 23 which are to be transferred to reception means 2,3,5 of system 1.

Typically, a message contains information about the frequency, polarity and band of a transponder requested by the user. It also contains the identification address of user terminal 23 that is generating the request. The identification address of user terminal 23 can be programmed, for instance, through the graphic interface of user terminal 23 itself.

Different types of user terminals 23 capable of receiving satellite signals, e.g. a satellite receiver or a personal video recorder, may be associated with an FSK transmitter 21; in this case, FSK transmitter 21 shall have a number of inputs being at least equal to the number of inputs of user terminal 23 to be connected.

The path followed by a message sent to reception means 2,3,5 by a user terminal 23, and vice versa, is as follows.

When a user wants to select a programme, he/she sends a request, by using the remote control 25 or other similar selection means, to user terminal 23, which then sends a control signal, preferably DiSEqC™ type, to FSK transmitter 21 with which user terminal 23 is associated.

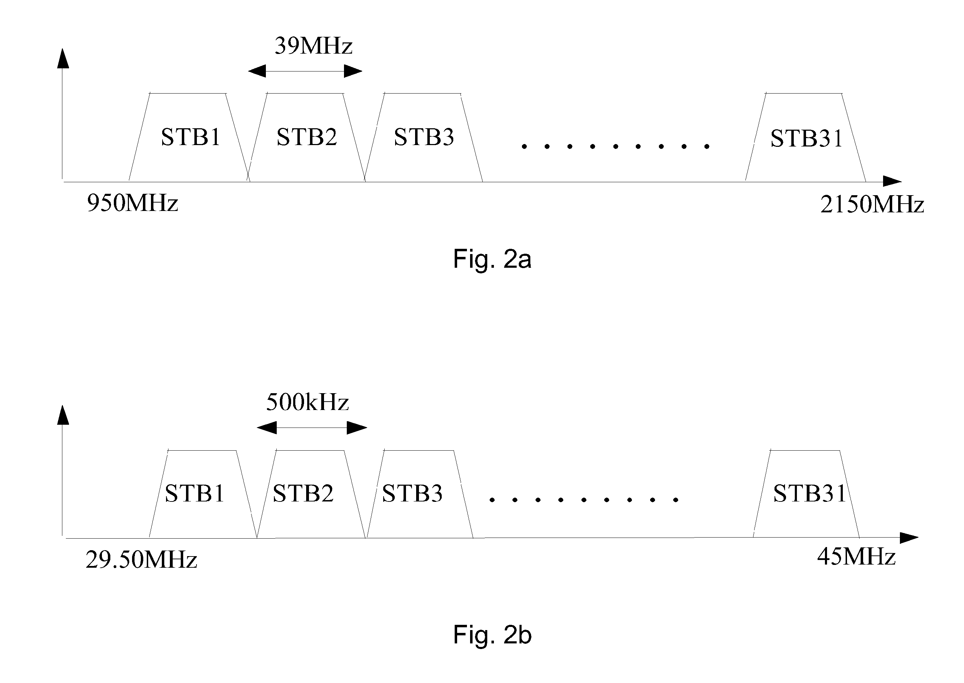

FSK transmitter 21 modulates the received data according to FSK modulation on a personal return channel comprised within the band 5 - 65 MHz, commonly dedicated to transmissions to reception means 2,3,5 from a user. In the exemplificative representation of Fig. 2B, the return channel has a bandwidth comprised between band centre frequencies of 29-45 MHz.

The return channel is dedicated to the respective FSK transmitter 21 and is not accessible to other FSK transmitters 21 being present in system 1.

In the example of Fig. 2B, FSK transmitter 21 outputs an FSK modulated signal having a bandwidth of 100 KHz, which is sent on a channel having a width of 500 KHz in the central frequency band of 29-45 MHz.

Preferably, FSK transmitter 21 utilizes a "Manchester" type coding for each message.

The message which is sent by FSK transmitter 21 to the associated IF-IF frequency converter 7 contains the address of FSK receiver 9, which corresponds to the number assigned to the personal return channel; thus, any messages directed to another IF-IF converter 7 but erroneously demodulated by FSK receiver 9 are automatically ignored.

FSK receiver 9 demodulates the data and sends it, e.g. through a 485 type bus, to IF-IF frequency converter 7.

IF-IF frequency converter 7 comprises a 13/18V, 0/22kHz signal generator which, by analyzing the message coming from user terminal 23, can drive the output of multiswitch 5 or of LNB module 3 appropriately.

Each user having at least one user terminal 23 connected to network 24 receives the requested transponder on a dedicated channel, i.e. on one of the personal channels into which the IF Sat band has been subdivided. Preferably, the IF Sat band is subdivided into thirtyone channels, each having a bandwidth of 39 MHz, as exemplified in Fig. 2A.

The selected transponder is distributed through distribution network 24 to user terminal 23 that requested it.

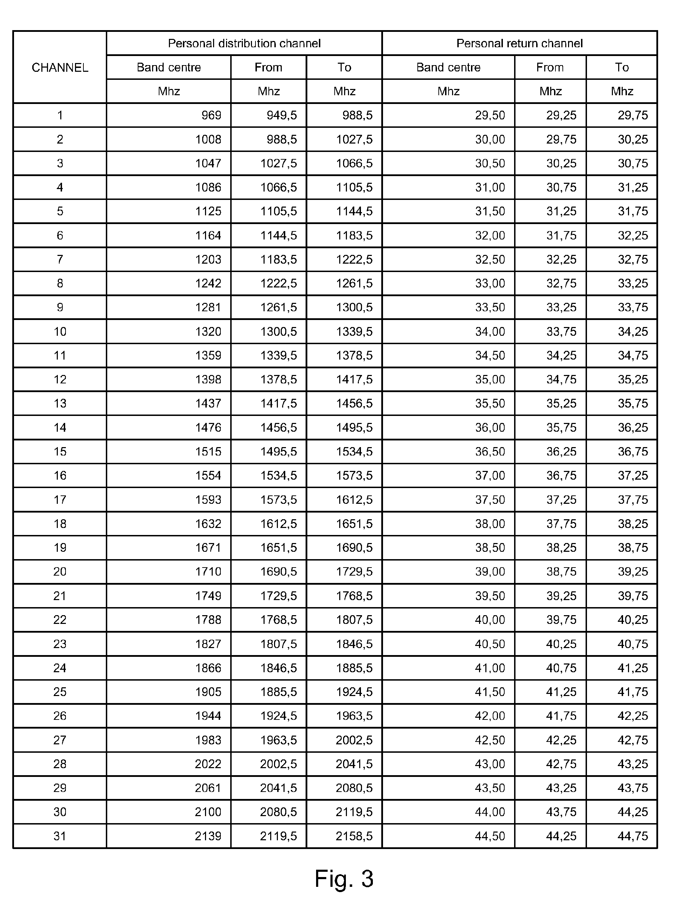

Fig. 3 shows a possible channelling example, wherein the central frequency of the first personal distribution channel is 969 MHz and the distance between adjacent channels is 39 MHz. The band centre of the thirty-first distribution channel is 2,139 MHz.

Personal return channels have a bandwidth of 500 KHz. The personal return channel assigned to the first user terminal has a band centre equal to 29.5 MHz, whereas the personal return channel assigned to the thirty-first user terminal has a band centre equal to 44.5 MHz.

The advantages of the present invention are apparent from the above description.

A first advantage of the present invention lies in the fact that each FSK transmitter 21 transmits on a dedicated channel with a 500kHz bandwidth in the 5-65MHz frequency band, preferably in the 29.5-44.5MHz central frequency band.

This band is advantageously free from the low-frequency noise of the network 24, and is sufficiently far from the frequency bands commonly used for distributing audio-video signals.

A second advantage of the present invention lies in the fact that system 1 is made up of modules which are wholly dedicated to each user terminal and offers the utmost flexibility and modularity, in that at least one specific personal distribution channel and one specific personal return channel are assigned to each user terminal.

A further advantage of the present invention lies in the fact that, thanks to the use of the FDMA (Frequency Division Multiple Access) system, different pairs of selection means 9,21, consisting of an FSK transmitter 21 and an FSK receiver 9, do not interfere with each other.

A further advantage of the present invention lies in the fact that the system requires just one cable to be laid along the main lead-in of the building, rather than as many cables as the number of polarities and bands to be distributed, as required by other known systems having the same high transmission capacity over the distribution network. Laying just one cable implies lower costs than laying a plurality of cables; moreover, this latter process is also difficult to carry out, especially in older buildings.

It is clear that the above description is intended as a non-limiting example, and that variations and changes are possible without departing from the protection scope of the invention.

For example, the signal received by reception means 2,3,5 may be converted into a frequency band other than the IF Sat band; consequently, device 3 and frequency conversion means 7 will amplify, convert and allocate the signal received in said frequency band other than the IF Sat frequency band.

For example, a plurality of multiswitch modules 5 may be used instead of just one multiswitch module 5. The number of required multiswitches depends on the number of outputs of the single multiswitch to be used and on the number of inputs of user terminals 23 to be connected to the distribution network.

For example, assuming that the system does not necessarily require a minimum execution time for commands sent on return channel 14, it is possible to use a single head-end FSK receiver 9 which, in addition to receiving the FSK signal, must also transmit a timing signal for TDM (Time Division Multiplexing) access.

In this scenario, user-end transmitters must also be capable of receiving the respective timing signal, and just one return channel is used which is common to all user terminals, which share the same personal return channel.

Alternatively, the return channel may be accessed randomly, with possible retransmissions of the control signal in order to increase the probability of a successful communication between a user terminal and the head of system 1, which communication may be subject to collisions due to the personal return channel being shared by many user terminals.

For example, FSK receiver 9 and IF-IF frequency converter 7 may be housed in the same container, so that each input of user terminals 23 connected to network 24 corresponds to a single device which can carry out the frequency conversion and the reception of the FSK control signal.

For example, the FSK transmitter may be housed in the same container as the user terminal and form a logic unit integrated into the receiver functionalities.

## Claims

1. System for distributing a plurality of television signals and/or audio signals and/or video signals in a condominium and/or community environment, comprising:
a) reception means (2,3,5) to receive via satellite at least a part of said signals;
b) frequency conversion means (7) to frequency convert one or more of said signals received via satellite into reserved frequency portions, or personal distribution channels, of a first frequency band;
c) distribution means (13,17,24) to distribute said signals received via satellite on a distribution network (24) which supplies a plurality of signal sockets (17) connected to at least one respective user terminal (23) capable of receiving said signals;
d) selection means (9,21) to select at least one of said signals received via satellite through control means (25) which can be operated by a user,
**characterized in that** said frequency conversion means (7) and said selection means (9,21) comprise first (8) and second (10,20) programmable memory means, respectively, which allow at least one first reserved frequency portion of said first frequency band and one second reserved frequency portion, or personal return channel, of a second frequency band being different from said first frequency band to be associated with each user terminal (23), said second frequency band being used for exchanging messages between said user terminal (23) and said reception means (2,3,5) through said selection means (9,21).

2. System according to claim 1, **characterized in that** said first frequency band is the IF-SAT frequency band comprised between 950 and 2,150 MHz.

3. System according to claim 2, **characterized in that** the bandwidth of each of said personal distribution channels is approximately equal to the bandwidth of a satellite transponder.

4. System according to claim 3, **characterized in that** said bandwidth is approximately 39 MHz.

5. System according to claim 1, **characterized in that** said second frequency band is chosen within a frequency range that does not interfere with neither said first frequency band nor with other frequency bands used for transmitting audio/video signals.

6. System according to claim 5, **characterized in that** said second frequency band is approximately comprised between 5 and 65 MHz.

7. System according to claim 6, **characterized in that** said second frequency band is approximately comprised between the band centre frequencies of 29.5 and 44.5 MHz.

8. System according to claim 7, **characterized in that** the bandwidth of a personal return channel is approximately 500 kHz.

9. System according to claim 1, **characterized in that** as many personal distribution channels are associated with each user terminal (23) as the number of tuners comprised in said user terminal (23).

10. System according to claim 1, **characterized in that** said frequency conversion means (7) and said selection means (9,21) comprise interface means for interfacing said frequency conversion means (7) and said selection means (9,21) with a suitable programming device, for the purpose of programming said first (8) and second (10,20) programmable memory means.

11. System according to claim 10, **characterized in that** said interface means comprise an interface for connecting said first (8) and second (10,20) programmable memory means to a local area network.

12. System according to claim 10 or 11, **characterized in that** said first (8) and second (10,20) memory means can be programmed upon entering a password.

13. System according to claim 1, **characterized in that** said selection means (9,21) comprise at least one FSK receiver (9) connected to said reception means (1,3,5) and one FSK transmitter (21) connected to at least one respective user terminal (23).

14. System according to claim 13, **characterized in that** said at least one FSK receiver (9) serves all FSK transmitters (21) of said system through a random access pattern.

15. System according to claim 13, **characterized in that** said at least one FSK receiver (9) serves all FSK transmitters (21) of said system through a TDM (Time Division Multiplexing) access pattern.

16. System according to claim 14 or 15, **characterized in that** said personal return channel is univocal for each user terminal (23).

17. System according to claim 13, **characterized in that** said FSK transmitter (21) comprises a number of inputs being at least equal to the number of inputs of the user terminals (23) connected thereto.

18. System according to claim 13, **characterized in that** said FSK transmitter (21) utilizes a Manchester type coding for sending messages.

19. System according to claim 13, **characterized in that** said frequency conversion means (7) and said FSK receiver (9) are housed in the same container.

20. System according to claim 13, **characterized in that** said user terminal (23) and said FSK transmitter (21) are housed in a same second container.

21. System according to claim 1, **characterized in that** said frequency conversion means (7) comprise a 13/18V, 0/22kHz generator, which can drive the output of said signal reception means (2,3,5).

22. System according to claim 1, **characterized in that** said signal reception means (2,3,5) comprise at least one multiswitch device (5).

23. System according to claim 1 or 22, **characterized in that** said signal reception means (2,3,5) comprise an LNB device (3).

24. System according to any of the preceding claims, **characterized in that** said selection means (9,21) operate through a distribution network (24) consisting of a main lead-in comprising a single coaxial cable for distributing said signals.

25. System according to any of the preceding claims, **characterized in that** mixing means (13) are provided for conveying television signals and/or audio and/or video signals coming from at least one television signal source (11) on said distribution network (24), said signals belonging to at least a third frequency band different from said first and second frequency bands.

26. Method for distributing a plurality of television signals and/or audio and/or video signals in a condominium and/or community environment through a system (1) comprising:
a) reception means (2,3,5) to receive via satellite at least a part of said signals;
b) frequency conversion means (7) to frequency convert one or more of said signals received via satellite into reserved frequency portions, or personal distribution channels, of a first frequency band;
c) distribution means (13,17,24) to distribute said signals received via satellite on a distribution network (24) which supplies a plurality of signal sockets (17) connected to at least one respective user terminal (23) capable of receiving said signals;
d) selection means (9,21) to select at least one of said signals received via satellite through control means (25) which can be operated by a user,
said method being **characterized by** the step of programming, through a suitable programming device, first (8) and second (10,20) programmable memory means belonging to said frequency conversion means (7) and to said selection means (9,21), respectively, so that at least one first reserved frequency portion of said first frequency band and one second reserved frequency portion, or personal return channel, of a second frequency band being different from said first frequency band is associated with each user terminal (23), said second frequency band being used for exchanging messages between said user terminal (23) and said reception means (2,3,5) through said selection means (9,21).

27. Method according to claim 26, **characterized in that** said programming step is possible upon entering a password through said programming device.

28. Method and/or system according to the innovative teachings of the present description, which represent a preferred embodiment of the claimed invention.
